# NEW EUROPEAN PATENT SPECIFICATION

(11) **EP 2 994 724 B2**
(45) Date of publication and mention of the opposition decision: **28.05.2025**
(45) Mention of the grant of the patent: 05.07.2017
(21) Application number: 14724995.7
(22) Date of filing: 07.05.2014
(51) Int. Cl.: G01F 15/075, F24D 19/10, F24D 10/00, G01D 4/00

(54) **CONSUMPTION METER WITH SELECTABLE LEGAL REGISTERS**
VERBRAUCHSMESSER MIT VOR ORT WÄHLBAREN EICHPFLICHTIGEN REGISTERN
COMPTEUR DE CONSOMMATION AVEC REGISTRES LÉGAUX SÉLECTIONNABLES SUR SITE

(30) Priority: 08.05.2013 EP 13167067
(43) Date of publication of application: 16.03.2016
(73) Proprietor: Kamstrup A/S, 8660 Skanderborg (DK)
(72) Inventor: LANG, Søren, 8660 Skanderborg (DK); JENSEN, Mads Erik Lund, 8840 Rødkærsbro (DK)
(74) Representative: Rupp, Christian
(86) International application number: PCT/DK2014/050129
(87) International publication number: WO 2014/180484

(56) References cited:
- EP-A1- 2 000 788
- EP-A1- 2 000 788
- EP-B1- 1 975 583
- DE-A1- 102010 011 272
- DE-A1- 102011 054 830
- DE-B3- 102007 014 810
- US-A- 4 245 501
- US-A- 4 245 501
- US-A1- 2013 031 988
- Installation guide for MULTICAL®21, Kamstrup, document 5512901 D1 GB 02.2012, February 2012
- Product Catalogue “Hydrometer Warmemesstechnik”, disclosing SCYLAR, a magnetic inductive heat meter, September 2006
- Hydrometer GmbH “Scylar II software description
- Configuration Instructions Calculator UC50, November 2011
- Eichsbescheinigung derZertifikatsnummerzum Calculator UC50
- “Installation guide for MULTICAL 21”, February 2012, version label “5512901 D1 GB 02.2012”
- “Installation guide for MULTICAL 21”, version label “5512901_D1_GB_02.2012”, http://kamstrup.com/media/16684/file.pdf on 14 June 2013, retrieved from Internet https://web.archive.ora/web/20130614201746/http://kamstrup.com/media/16684/file.pdf on 27 November 2019
- ’’Installation and User Guide for MULTICAL 61”, April 2010, version label “5512697_ B3_GB_04.2010”
- Print from Internet Archive Wayback Machine evidencing the capture of E20: PDF-file “Installation and User Guide for MULTICAL 61”, version label “5512697_B3_GB_04.2010”, http://www.kamstrup.com/media/12436/file.pdf> on 13 August 2010, retrieved from Internet https://web.archive.ora/web/20100813064611/http://www.kamstrup.com/media/12436/file.pdf on 27 November 2019
- Print from Internet Archive Wayback Machine of webpage “MULTICAL-61”, http://www.kamstrup.com/12246/MULTICAL-61> on 12 August 2010, retrieved from Internet https://web.archive.orq/web/20100812054604/http://www.kamstrup.com/12246/MULTICAL-61 on 27 November 2019
- Print from Internet Archive Wayback Machine of webpage “New heat and cooling meter designed for sub-metering”, http://kamstrup.com/25123/new-energy-meter-designed-for-submetering on 13 November 2013, retrieved from Internet https://web.archive.orq/web/20131113161125/http://kamstrup.com/25123/new-energymeter-designed-for-sub-metering> on 27 November 2019
- Print from Internet Archive Wayback Machine of webpage “Easy Heat Meter Installation”, http://www.submetering.kamstrup.com/25886/Award-winning-design> on 5 March 2014, retrieved from Internet https://web.archive.Org/web/20140305123849/http://www.submeterinq.kamstrup.com/25886/Award-winning-design> on 27 November 2019
- print from Internet Archive Wayback Machine of webpage “MULTICAL-61”, http://www.kamstrup.com/12246/MULTICAL-61 on 12 August 2010, retrieved from Internet https://web.archive.orq/web/20100812054604/http://www.kamstrup.com/12246/MULTICAL-61> on 27 November 2019
- Print from Internet Archive Wayback Machine of webpage “MULTICAL-61”, http://www.kamstrup.com/12246/MULTICAL-61 on 12 August 2010, retrieved from Internet https ://web.archive.org/web/20100812054604/http://www. kamstrup.com/12246/MULTICAL-61 on 27 November 2019

## Description

### FIELD OF THE INVENTION

The present invention relates to a consumption meter, such as an ultrasonic flow meter, for measuring consumption data of either a hot or a cold liquid supplied to a consumer site. The present invention also relates to a method for installation of a consumption meter.

### BACKGROUND OF THE INVENTION

Utilities supplied to an end-user site are in many situations metered at the end-user site by a consumption meter for billing purposes. For example, supplied district heating is metered by a heat meter whereas supplied district cooling is metered by a cooling meter. Consumption meters of the heat meter and cooling meter types often operate as energy meters for metering the supplied energy. An energy meter normally comprises a flow meter unit, two temperature sensors and a calculator unit, where the flow meter unit is arranged to measure the amount of supplied liquid, and the temperature sensors are arranged to measure the inlet and outlet temperatures. Based on the flow measurement and the temperature measurement, the calculator unit calculates the amount of energy consumed. Many energy meters can be used both as heat meters and as cooling meters, or even as combined meters.

Consumption meters which are used for billing purposes are subdued to regulatory demands. Such regulatory demands may be demands to the precision of the measurements. Regulatory demands require that meters are individually tested and verified according to national or international regulations before users can be billed based on a measured consumed amount.

In the verification test, the consumption meter is tested and verified for a given use and installation, e.g. whether it operates as a heat meter or as a cooling meter, as well as the specific installation configuration, e.g. whether it is to be mounted at the inlet side or at the outlet side of a consumer site. After verification, the consumption meter cannot legally be used in a different manner than the manner for which it was verified. One consequence is that already at the time of the order of the consumption meter, is it required to know the precise installation configuration. And moreover, in the situations where a meter is installed inconsistently with its verification, either a new meter should be installed or the meter should be remounted for re-verification for the specific installation configuration, even if the meter in principle can measure the consumption values in the given installation configuration.

In EP 2 000 788 A1 in the name of Kamstrup, an energy calculator is disclosed which in connection with the installation is arranged to detect installation errors to alert the installer already during installation, so that any errors can be corrected while the installer is present at the consumer site.

In EP 1 975 583 A1 in the name of Landis + Gyr, an energy meter is disclosed which comprises a main data memory for saving correctly determined hot or cold volumes, and secondary data memories for saving incorrectly determined hot or cold volumes relating to known types of installation errors. While incorrectly determined hot or cold volumes values are determined and saved, a meter exchange or re-verification is needed if the meter verification does not match the use or installation configuration.

In US 4,245,501 in the name of Wilgood Corporation, a combined heat and cooling meter is disclosed which comprises a heating and a cooling register, monitoring means for determining flow and temperature of the fluid supplied, and automatic switching means for connecting, during operation, the output of the monitoring means to either of the registers, whether the meter is operated in a heating or cooling environment.

In DE 10 2010 011 272 A2 in the name of Hydrometer, an energy meter is disclosed which comprises a display that shows the current operational state, by simultaneously displaying flow direction as well as whether heat energy or cooling energy is measured. Erroneous installation can be detected on site, however, a meter exchange or re-verification is needed if the meter verification does not match the use or installation configuration.

### SUMMARY OF THE INVENTION

It would be advantageous to achieve a consumption meter which is capable of measuring legally verified consumption data for more than one operational state at the consumer site, in particular for more than one operational state at the consumer site relating to the consumption meter being mounted at the inlet side or the outlet side of a consumer site. In general, the invention preferably seeks to mitigate, alleviate or eliminate one or more of the above mentioned disadvantages singly or in any combination. or wherein the consumption meter is arranged for receiving an input and to set the operational state of the consumption meter based on the input in accordance with the arrangement of the flow meter unit at the consumer site, so as to store consumption values in the legally verified register associated with the set operational state of the consumption meter.

Accordingly, in a first aspect, there is provided a consumption meter according to claim 1.

The advantage of this is at least twofold: One advantage relates to that the installer in one case can bring along to a consumer site a consumption meter which is not finally configured for the specific operational state, however, which may be configured at the consumer site. With this case the installer needs thus not in advance have full information as to whether the consumption meter at the consumer site is supposed to be installed at the inlet side or the outlet side of the installation. The installer therefore does not need to stock meters for all types of consumer installation configuration. Likewise, unconfigured consumption meters may be produced, which, upon receipt of an order, may be finally configured at the factory site for their specific application.

Another advantage relates to that in the event an erroneous installation nevertheless should occur, a meter exchange or re-verification can in at least some situations be avoided.

In the context of the present invention, "a legally verified consumption register" should be understood as a register, which is tested and verified for a given use, and which is therefore legally qualified for being used for billing purpose within the framework of such use.

Further in the context of the present invention, "an operational state of the consumption meter" shall mean the specific use of the consumption meter, *i.e.* as a inlet side mounted meter or as an outlet side mounted meter.

Moreover, a "register being associated with an operational state" shall mean that the register is tested and verified for being used for billing purposes when the meter is used in the specific use.

Also in the context of the present invention, "the consumption meter being mounted at the inlet side of the consumer site" and "the consumption meter being mounted at the outlet side of the consumer site", shall mean the consumption meter is mounted in the inlet supply line and the outlet supply line, respectively, of the consumer site.

Thus, according to the invention, the consumption meter involves at least two registers, which are legally verified registers, and which may be selected, e.g. by an installer at the consumer site, depending on the specific operational state of the consumption meter, i.e. the specific use of the consumption meter in an inlet side or outlet side of the consumer site.

Compared to consumption meters of the prior art, the consumption meter of the present invention involves a plurality of registers, which are legally verified for use with these different operational states, each legally verified register being associated with a specific operational state, and which is adapted to being selected upon receipt of an input to the consumption meter.

Although consumption meters of the prior art may involve a plurality of registers as well, such registers are not legally verified. Thus the secondary data memories of EP 1 975 583 A1 are not legally verified. Also, EP 1 975 583 A1 does not involve that the consumption meter is adapted for selection of a specific legally verified register to be used depending on the actual operational state of the consumption meter.

Likewise, the energy meter of US 4,245,501 is not adapted to being selectively arranged at the inlet side or outlet side of the consumer site and to operate therein in as a legally verified meter.

In addition to the legally verified consumption registers, a number of non-legally verified consumption registers may also be present with the consumption meter for various uses, such as data logging. Nevertheless, additional legally verified consumption registers may also be implemented with the consumption meter.

Advantageously, the flow meter unit is an ultrasonic flow meter arranged to measure a flow rate of the supplied liquid. In general, however, the flow meter unit may be any kind of suitable flow meter, such as a mechanical meter, e. g. an impeller-type meter, a magnetic inductive meter, etc.

In a second aspect, the invention relates to a method according to claim 10 for installation of a consumption meter according to claim 1.

Further embodiments, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates elements of a consumption meter arranged for fixed installation at a consumer site for the two situations of inlet mounted and outlet mounted flow meter units; and
Fig. 2 is a schematic of a calculator unit.

### DESCRIPTION OF EMBODIMENTS

Consumption meters for charging purposes are subjected to strong legal requirements regarding their function to ensure that the basic meter function works in a well-defined manner. A consumption meter must be approved by the authorities in order to be legally cleared for charging purposes. An important aspect in the approval process is that the meter is tested to measure consumption values within a specific precision, and that certain registers, i.e. memory allocations for electronic meters, are made in such a way that once the consumption value is stored in such a register, a sufficient high confidence can be assigned to this value, so that it can be used as a base for billing. The registers which are made to fulfil the requirement to be able to obtain an authority approval are referred to as legally verified consumption registers.

A legally verified consumption register has undergone a verification test with respect to the values stored therein. In the verification test, the consumption meter is subdued to known test conditions, and the resulting values stored in the consumption register are examined for compliance with the ideal values which follow from the test conditions. The verification test may be a split test, where different parts of the consumption meter are tested separately, or it may be a unified test, where the assembled consumption meter is tested as an assembly. In the unified test, a known volume of liquid at a given temperature is run through the flow meter unit and the determined consumption values are stored in the register under verification. The values stored in the consumption register under verification are compared with the known values that follow from the known test conditions. If the stored values comply with the test criteria, the consumption register is verified for the operational state for which it was tested. In a verification process each consumption meter is tested for compliance, and possibly calibrated if necessary. The verification is performed by or in corporation with a certifying organisation.

The verification test may be combined with a type test where the type of the consumption meter is subdued to a comprehensive test.

A consumption meter for measuring a hot or a cold liquid supplied to the consumer site in connection with district heating or district cooling is mounted in a fixed installation at the consumer site. Typically the flow meter unit and the temperature sensors are mounted in line with the supply pipeline.

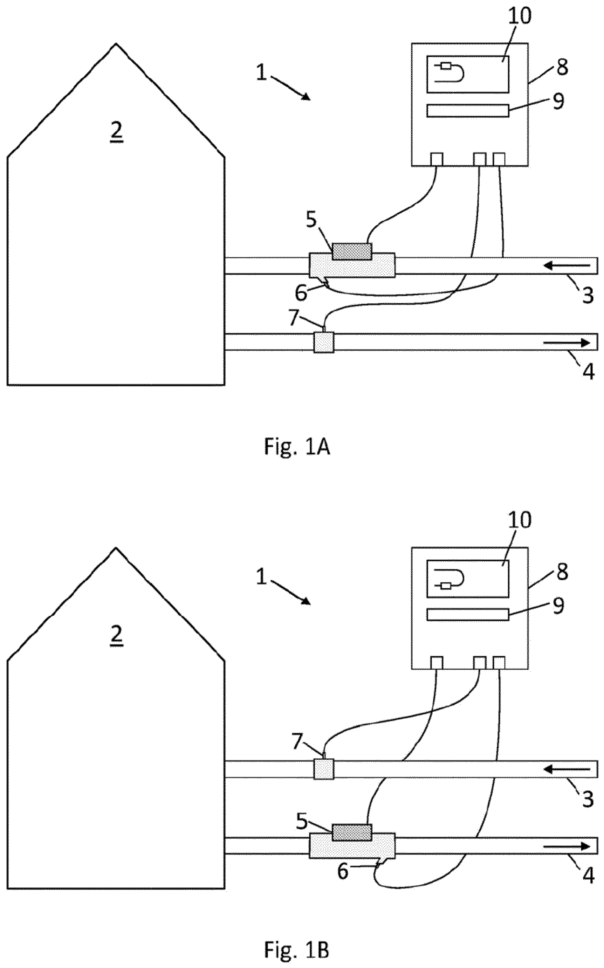

Embodiments of consumption meters in accordance with the invention are illustrated in Figs 1A and 1B.

Fig. 1A illustrates elements of a consumption meter arranged for fixed installation at a consumer site. The consumption meter is illustrated as a collection of separate interconnected elements, however, at least some of the elements may be integrated. In particular, the calculator unit and the flow meter unit may be integrated.

The figure illustrates a consumer site to which a supply line 3, 4 of hot or cold liquid is present in order for providing district heating or district cooling to a consumer 2, such as a household or a business premise. The supply line comprises an inlet line 3 and an outlet line 4. In Fig. 1A, a flow meter unit 5 is mounted in the inlet supply line 3 for measuring a flow quantity of the supplied liquid. The flow quantity is typically the supplied volume of the supplied liquid, but could also be such values as flow speed. The consumption meter further comprises an inlet temperature sensor 6 for measuring an inlet temperature, Tᵢₙ, of the supplied liquid medium, and an outlet temperature sensor 7 for measuring an outlet temperature, Tₒᵤₜ, of the supplied liquid medium. In connection with district heating, the liquid is supplied at a relatively high temperature, such as between 70 and 90 degrees Celsius and cooled down due to the energy release at the consumer site to heat the consumer site. Consequently, there is a temperature difference, ΔT, between the inlet temperature and the outlet temperature.

The figure further shows a calculator unit 8 configured to determine consumption values based on the flow quantity, the inlet temperature and the outlet temperature. To this end, the calculator unit comprises inputs from these elements.

Fig. 1B is similar to Fig. 1A, except that the flow meter unit 5 is mounted in the outlet supply line 4 for measuring the flow quantity of the supplied liquid at the outlet.

Fig. 1A and Fig. 1B illustrate two different operational states. The operational state of Fig. 1A is that of an inlet mounted flow meter unit, whereas the operational state of Fig. 1B is that of an outlet mounted flow meter unit. The operational states are different since the liquid temperatures are different in the inlet and in the outlet due to the energy consumption by the consumer. For a heat meter installation, the inlet temperature is higher than the outlet temperature, whereas for a cooling meter installation it is opposite.

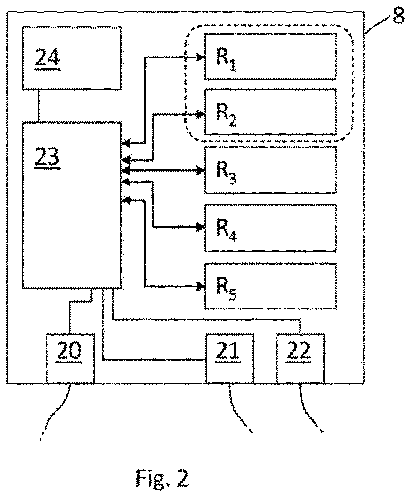

Figure 2 is a schematic of the calculator unit 8. The calculator unit 8 is a computing unit which is capable of obtaining sensor readings, in this case at least the two temperatures and the flow quantity, and based on these readings to calculate consumption values. Fig. 2 schematically shows elements of an embodiment of a calculator unit. The figure shows sensor connections 20 for the flow value, and 21, 22 for the two temperature readings, as well as a computing unit 23, typically in the form of an integrated circuit comprising one or more microprocessors. Moreover, a communication unit 24 is shown for remote reading of the consumption meter. Other components may be present as well.

Additionally, the calculator unit 8 comprises a number of registers for storing various values based on sensor readings. In the illustrated exemplary embodiment, the five registers, R₁ to R₅, are shown.

In the illustrated embodiment, the calculator unit comprises two legally verified consumption registers, R₁ and R₂, for storing consumption values verified for billing. The registers R₃ to R₅ are not legally verified, which means that values stored therein are not authorized for billing. Such registers may be used e.g. for data logging.

In the example R₁ is a legally verified consumption register associated with the operational state of an inlet mounted heat meter, whereas R₂ is a legally verified consumption register associated with the operational state of an outlet mounted heat meter. The use of at least two legally verified consumption registers associated with these operational states of the consumption meter has the advantage that prior to mounting of the consumption meter, the installer does not need to know whether the consumption meter should be mounted in the inlet or in the outlet side. If the meter is a replacement meter, the mount position is typically that of the former meter, whereas for a newly installed meter the mount position may be determined by such aspects as where the meter fits best in the pipeline. A consumer often does not have knowledge about the proper installation position, as such knowledge requires a certain level of expertise, and therefore cannot provide such information to the installer in advance. By use of the present invention, however, there is no need beforehand to know the installation position, since the consumption meter is capable of measuring legally verified consumption data for each of the operational states.

Instead, the consumption meter is arranged for receiving an input, e.g. at the consumer site, and to have set the operational state of the consumption meter based on this input. The specific legally verified register for storage of the consumption values for billing may thereby be selected on-site.

The input may be based on an input received at a user interface 9. For example, the installer may have access to a setup menu, in which it is possible to define the operational state of the consumption meter.

The input may also be received or calculated by the calculator in connection with an operational mode selection routine which is performed after installation. This has the advantage that the installer does not need to spend time on configuring this aspect of the meter.

The input may be a measured input which fulfils a selection criterion and which is received by the calculator unit. In embodiments, the selection criterion may be based on a temperature reading.

In embodiments, the first of the temperature sensors 6 is mounted in a receiver site comprised in the flow meter unit housing, and the second of the temperature sensors 7 is mounted in a receiver unit separate from the flow meter housing. The separate temperature sensor receiver unit may be mounted in the other supply line than the one of the flow meter unit.

In such embodiment, the temperature reading can be used to determine the mount position. In the given embodiment where the flow meter unit is a heat meter, the selection criterion may be that if the temperature measured at the flow meter housing is higher than the temperature measured separate from the flow meter housing, the flow meter is inlet mounted. Likewise, if the temperature measured at the flow meter housing is lower than the temperature measured separate from the flow meter housing, the flow meter is outlet mounted.

Thus, according to this embodiment of the invention, the input to be received is received by the calculator unit and is based on a temperature difference between the inlet temperature and the outlet temperature.

Also the absolute temperature may be used. For example, if the temperature at the flow meter housing is higher than 50 degrees Celsius, the meter may be determined to be inlet mounted.

Thus, according to this embodiment of the invention, the input to be received is received by the calculator unit and is based on a temperature of the supplied liquid.

Once the operational state is determined or selected, it may be shown in a display 10 of the consumption meter. It may be an authority requirement that the operational state is shown in the display.

In Fig. 1A and 1B the flow meter unit housing is illustrated to comprise a receiver site for a temperature sensor. In general, the temperature probes may both be mounted in separate receiver units, one unit for each supply line.

According to the invention, the consumption meter comprises two legally verified consumption registers for a heat meter, where the first legally verified consumption register is related to inlet mount of the consumption meter and the second legally verified consumption register is related to outlet mount of the consumption meter.

In other embodiments, the consumption meter may comprise that the legally verified consumption registers are registers for heat energy and/or for cooling energy.

Also, in alternative embodiments of the invention, the legally verified consumption registers are registers for flow of supplied liquid in a first flow direction, and for flow of the supplied liquid in a second, opposite flow direction, or they are registers for flow of supplied liquid registered at a first pulse number of the flow meter unit, and for flow of supplied liquid registered at a second pulse number of the flow meter unit.

With the latter case, the consumption meter may be configured with respect to a pulse number as received from *e.g.* a mechanical flow meter unit, and in turn reconfigured in case the flow meter unit is replaced or changed.

In another embodiment, the consumption meter may comprise at least four legally verified consumption registers for storing consumption values verified for billing: A first legally verified consumption register for heat energy in inlet mount, and a second legally verified consumption register for heat energy in outlet mount, as well as a third legally verified consumption register for cooling energy in inlet mount, and a fourth legally verified consumption register for cooling energy in outlet mount. This is summarized in the following table together with the formulas for the energy calculations:

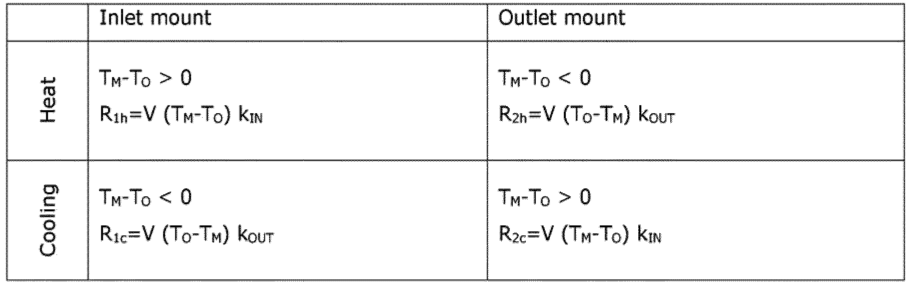

In this table, T_{M} and T_{O} refer to the temperature at the flow meter unit as measured by temperature sensor 6 and to the temperature as measured by the receiver separate from the flow meter unit and as measured by temperature sensor 7, respectively, V is the determined volume V as measured by the flow meter unit, kᵢₙ and kₒᵤₜ are correction factors which accounts for the physical differences among hot and cold liquid, such as density and specific heat capacity. The energy values are referred to by the respective registers R₁ₕ, R_{1c}, R₂ₕ, and R_{2c}, which are all legally verified registers.

The above embodiment is advantageous for an asymmetric flow meter. In this context, an asymmetric flow meter is a flow meter which needs to operate in a specific orientation with respect to the flow direction, e.g. due to a flow conditioner inserted in the inlet to remove or reduce vortexes or by other means improve the flow profiles, or due to a grid inserted in the inlet to block debris in the flowing liquid. For such a flow meter, four registers cover many important applications.

In an embodiment, the consumption meter is arranged to perform the energy calculation and store the result only in the register which is associated with the operational state as determined from the input. For example, if the operational state is selected to be an inlet mounted heat meter, values are stored only in the legally verified register R₁, whereas neither the legally verified register R₂ nor any other registers are used.

In another embodiment, in addition to storing consumption values for billing only in the register associated with the determined operational state, consumption data are stored in at least one more legally verified consumption register of the at least two legally verified consumption registers which is not associated with the determined operational state. Thus both of the first and the second legally verified consumption registers are arranged for storage of consumption values associated with the selected operational state of consumption meter. For example, in addition to storing values in the register R₁, values are also stored in R₂. In general, the energy calculation may be performed for all legally verified registers and stored therein, irrespectively of the determined operational state. The operational state is nevertheless used for determine which register that should be used for billing.

An advantage of this embodiment is that in the event that the consumption meter should register an erroneous operational state, e.g. due to an erroneous user input or an installation error, the consumption value for the correct operational state may thereby be stored in the relevant register. In such situation, it may be possible merely to correct the operational state of the meter, instead of exchanging it or re-verifying it. For example if an inlet mounted heat meter is erroneously provided with the operational state of an outlet mounted heat meter, it will register values for billing in R₂. The correct formula is never the less the one for R₁. However, since R₁ is also a legally verified register, the operational state can be corrected, and thereby the legally verified register can be corrected without exchange or re-verification.

Likewise, in an embodiment of the invention, the calculator unit comprises at least a third legally verified consumption register associated with the first or second operational state, wherein the consumption meter is arranged for storage of consumption values in the legally verified register associated with the selected operational state of the consumption meter as well as in the third legally verified consumption register.

In further embodiments, at least one of the legally verified consumption registers is imposed with an access constraint so that data can only be stored in the register upon fulfilment of the access constraint, and otherwise disregarded. For example, an access constraint may be that the temperature difference should be either positive or negative.

In the embodiment with four legally verified consumption registers, the temperature difference alone cannot be used to select the operational state, since an inlet mounted heat meter and an outlet mounted cooling meter has the same temperature difference, and likewise with an outlet mounted heat meter and an inlet mounted cooling meter. In this situation, the mount position may be determined from the temperature difference whereas whether the meter is a heat meter or a cooling meter is determined from a user input or an absolute temperature reading.

In embodiments the flow meter may function correctly irrespectively of the flow direction. In such situation the meter may comprise at least one legally verified consumption register for storing consumption values verified for billing of the supplied liquid that flows in a direction which is opposite the operating flow direction. In general, the consumption meter may comprise two times the number of the various register. For example, the above table may comprise eight possibilities, one for each of the two flow directions.

Also in embodiments the calculator unit comprises at least a third legally verified consumption register associated with the first or second operational state, wherein the consumption meter is arranged for storage of consumption values in the legally verified register associated with the selected operational state of the consumption meter or in the third legal legally verified consumption register based on a storage criterion.

Thus two or more legally verified registers are associated with the operational state so that consumption values for billing are stored in at least one of the two or more associated registers based on a storage criterion. For example, for a combined heat and cooling meter which is arranged for metering heat energy during winter, and cooling energy during summer, the operational state may be set to be a combined meter. This operational state may be associated with four legally verified registers, and depending upon whether the meter is inlet mounted or outlet mounted, R₁ₕ and R_{1c}, or R₂ₕ and R_{2c} may be selected. A storage criterion may be selected as to whether heating energy or cooling energy is calculated. The storage criterion may be the temperature difference, the inlet temperature or other appropriate criteria.

The consumption meter may be arranged for receiving the input while being in a set up mode. Thus, in an embodiment, the consumption meter may be able to operate in a setup mode where it can be arranged to operate in any of the at least two operational states. In the setup mode, the operational state can be selected from a group of possible operational states in accordance with the situation for which the meter has been verified. Upon termination of the setup mode, the consumption meter enters an operational mode, where it operates in accordance with the selected operational state.

It may be advantageous to implement, that once the setup mode has been terminated, the operational state can only be changed by breaking a physical seal of the consumption meter. In this manner, only authorized persons can change a selected operational state of the meter.

According to the claimed invention, the setup mode is terminated automatically by detecting a flow of a preselected amount of the supplied liquid, such as when more than 1 litre, 10 litres or another appropriate amount of liquid has flown through the meter.

Also, according to an embodiment of the invention, the consumption meter is further arranged for, in case an operational state of the consumption meter being inconsistent with the installation of the flow meter unit was previously set, receiving an additional input at the consumer site and to set the operational state of the consumption meter based on the input in accordance with the arrangement of the flow meter unit at the consumer site, so as to store consumption values in the legally verified register associated with the set operational state of the consumption meter.

With the second aspect of the invention the method for installation of a consumption meter may further comprise that both of the first and the second legally verified consumption registers are used for storage of consumption values associated with the selected operational state of the consumption meter. For example, the method may comprise that the calculator unit comprises at least a third legally verified consumption register associated with the first or second operational state so as to store consumption meter consumption values in the legally verified register associated with the selected operational state of the consumption meter as well in the third legally verified consumption register.

## Claims

1. A consumption meter (1) arranged for fixed installation at a consumer site (2) for measuring consumption data of either a hot or a cold supplied liquid to the consumer site, the meter comprises:
- a flow meter unit (5) arranged for mount at either an inlet side (3) or an outlet side (4) of the consumer site, and arranged for measuring a flow quantity of the supplied liquid;
- an inlet temperature sensor (6) for measuring an inlet temperature of the supplied liquid, and an outlet temperature sensor (7) for measuring an outlet temperature of the supplied liquid;
- a calculator unit (8) configured to determine consumption values based on the flow quantity, the inlet temperature and the outlet temperature, **characterised in that** the calculator unit comprises at least a first (R₁) and a second (R₂) legally verified consumption registers for storing consumption values verified for billing, the first legally verified consumption register being associated with a first operational state of the consumption meter being mounted at the inlet side of the consumer site and the second legally verified consumption register being associated with a second operational state of the consumption meter being mounted at the outlet side of the consumer site, so that the consumption meter is capable of measuring legally verified consumption data for each of the at least first and second operational states;
wherein the consumption meter is arranged for receiving an input and to set the operational state of the consumption meter based on the input in accordance with the arrangement of the flow meter unit at the consumer site, so as to store consumption values in the legally verified register associated with the set operational state of the consumption meter,
wherein the consumption meter is arranged for receiving the input while being in a set up mode, and wherein the consumption meter is arranged for automatically terminating the setup mode by detecting a flow of a preselected amount of the supplied liquid.

2. The consumption meter according to claim 1, wherein the consumption meter is further arranged for, in case an operational state of the consumption meter being inconsistent with the actual installation of the flow meter unit, receiving an additional input at the consumer site and to set the operational state of the consumption meter based on the input in accordance with the arrangement of the flow meter unit at the consumer site, so as to store consumption values in the legally verified register associated with the set operational state of the consumption meter.

3. The consumption meter according to any of the preceding claims, wherein the consumption meter comprises at least four legally verified consumption registers for storing consumption values verified for billing comprises a first legally verified consumption register for heat energy in inlet mount, and a second legally verified consumption register for heat energy in outlet mount, and a third legally verified consumption register for cooling energy in inlet mount, and a fourth legally verified consumption register for cooling energy in outlet mount.

4. The consumption meter according to any of claims 1 or 2, wherein the calculator unit comprises at least a third legally verified consumption register associated with the first or second operational state, wherein the consumption meter is arranged for storage of consumption values in the legally verified register associated with the selected operational state of the consumption meter as well as in the third legally verified consumption register.

5. The consumption meter according to any of claims 1 or 2, wherein the calculator unit comprises at least a third legally verified consumption register associated with the first or second operational state, wherein the consumption meter is arranged for storage of consumption values in the legally verified register associated with the selected operational state of the consumption meter or in the third legal legally verified consumption register based on a storage criterion.

6. The consumption meter according to any of the preceding claims, wherein at least one of the legally verified consumption registers for storing consumption values is imposed with an access constraint so that data can only be stored in the register upon fulfilment of the access constraint.

7. The consumption meter according to any of the preceding claims, wherein the flow meter unit comprises a flow meter unit housing, and wherein a first of the inlet and outlet temperature sensors is mounted in a receiver site comprised in the flow meter unit housing, and wherein a second of the inlet and outlet temperature sensors is mounted in a receiver unit separate from the flow meter unit housing.

8. The consumption meter according to any of the preceding claims, wherein the input to be received is received by the calculator unit and is based on a temperature difference between the inlet temperature and the outlet temperature.

9. The consumption meter according to any of the preceding claims, wherein the input to be received is received by the calculator unit and is based on a temperature of the supplied liquid.

10. A method for installation of a consumption meter (1) arranged for fixed installation at a consumer site (2) for measuring consumption data of either a hot or a cold supplied liquid to the consumer site,
wherein the meter comprises:
- a flow meter unit (5) arranged for mount at either an inlet side (3) or an outlet side (4) of the consumer site, and arranged for measuring a flow quantity of the supplied liquid;
- an inlet temperature sensor (6) for measuring an inlet temperature of the supplied liquid, and an outlet temperature sensor (7) for measuring an outlet temperature of the supplied liquid;
- a calculator unit (8) configured to determine consumption values based on the flow quantity, the inlet temperature and the outlet temperature, wherein the calculator unit comprises at least a first (R₁) and a second (R₂) legally verified consumption registers for storing consumption values verified for billing, the first legally verified consumption register being associated with a first operational state of the consumption meter being mounted at the inlet side of the consumer site and the second legally verified consumption register being associated with a second operational state of the consumption meter being mounted at the outlet side of the consumer site;
- wherein the consumption meter is arranged for receiving the input while being in a set up mode, and wherein the consumption meter is arranged for automatically terminating the setup mode by detecting a flow of a preselected amount of the supplied liquid; and
wherein the method comprises:
- arranging the flow meter unit at either an inlet side or an outlet side of the consumer site;
- providing an input to be received by the consumption meter, to select, between the at least first and second operational states of the consumption meter, the operational state of the consumption meter in accordance with the arrangement of the flow meter unit at the consumer site so as to store consumption values in the legally verified register associated with the selected operational state of the consumption meter.

## Patentansprüche

1. Verbrauchsmesser (1), der für eine ortsfeste Installation an einem Verbrauchsort (2) zum Messen von Verbrauchsdaten einer entweder heißen oder kalten am Verbrauchsort eingespeisten Flüssigkeit angeordnet ist, wobei der Messer umfasst:
- eine Strömungsmessereinheit (5), die zur Montage an entweder einer Eingangsseite (3) oder einer Ausgangsseite (4) des Verbrauchsorts angeordnet ist und zum Messen einer Durchflussmenge der eingespeisten Flüssigkeit angeordnet ist;
- einen Eingangstemperatursensor (6) zum Messen einer Eingangstemperatur der eingespeisten Flüssigkeit und einen Ausgangstemperatursensor (7) zum Messen einer Ausgangstemperatur der eingespeisten Flüssigkeit;
- eine Recheneinheit (8), die zum Bestimmen der Verbrauchswerte auf der Grundlage der Durchflussmenge, der Eingangstemperatur und der Ausgangstemperatur konfiguriert ist, **dadurch gekennzeichnet, dass** die Recheneinheit mindestens ein erstes (R₁) und ein zweites (R₂) rechtsgültig geprüftes Verbrauchsregister zum Speichern von zur Rechnungsstellung geprüften Verbrauchswerten umfasst, wobei das erste rechtsgültig geprüfte Verbrauchsregister mit einem ersten Betriebszustand des Verbrauchsmessers verknüpft ist, der an der Eingangsseite des Verbrauchsorts montiert ist, und das zweite rechtsgültig geprüfte Verbrauchsregister mit einem zweiten Betriebszustand des Verbrauchsmessers verknüpft ist, der an der Ausgangsseite des Verbrauchsorts montiert ist, sodass der Verbrauchsmesser in der Lage ist, rechtsgültig geprüfte Verbrauchsdaten für mindestens sowohl den ersten als auch den zweiten Betriebszustand zu messen;
wobei der Verbrauchsmesser zum Empfangen einer Eingabe und zum Einstellen des Betriebszustands des Verbrauchsmessers auf der Grundlage der Eingabe in Übereinstimmung mit der Anordnung der Strömungsmessereinheit am Verbrauchsort angeordnet ist, um Verbrauchswerte in dem rechtsgültig geprüften Register zu speichern, das mit dem eingestellten Betriebszustand des Verbrauchsmessers verknüpft ist,
wobei der Verbrauchsmesser zum Empfangen der Eingabe angeordnet ist, während er sich in einem Einstellmodus befindet, und wobei der Verbrauchsmesser zum automatischen Beenden des Einstellmodus durch Erfassen eines Durchflusses einer vorbestimmten Menge der eingespeisten Flüssigkeit angeordnet ist.

2. Verbrauchsmesser nach Anspruch 1, wobei der Verbrauchsmesser weiterhin zum Empfangen einer zusätzlichen Eingabe am Verbrauchsort und zum Einstellen des Betriebszustands des Verbrauchsmessers auf der Grundlage der Eingabe in Übereinstimmung mit der Anordnung der Strömungsmessereinheit am Verbrauchsort angeordnet ist, um Verbrauchswerte in dem rechtsgültig geprüften Register zu speichern, das mit dem eingestellten Betriebszustand des Verbrauchsmessers verknüpft ist, falls ein Betriebszustand des Verbrauchsmessers nicht der tatsächlichen Installation der Strömungsmessereinheit entspricht.

3. Verbrauchsmesser nach einem der vorhergehenden Ansprüche, wobei der Verbrauchsmesser mindestens vier rechtsgültig geprüfte Verbrauchsregister zum Speichern von zur Rechnungsstellung geprüften Verbrauchswerten umfasst, umfassend ein erstes am Eingang montiertes rechtsgültig geprüftes Verbrauchsregister für Wärmeenergie und ein zweites am Ausgang montiertes rechtsgültig geprüftes Verbrauchsregister für Wärmeenergie und ein drittes am Eingang montiertes rechtsgültig geprüftes Verbrauchsregister für Kälteenergie und ein viertes am Ausgang montiertes rechtsgültig geprüftes Verbrauchsregister für Kälteenergie.

4. Verbrauchsmesser nach einem der Ansprüche 1 oder 2, wobei die Recheneinheit mindestens ein drittes rechtsgültig geprüftes Verbrauchsregister umfasst, das mit dem ersten und dem zweiten Betriebszustand verknüpft ist, wobei der Verbrauchsmesser zum Speichern von Verbrauchswerten in dem rechtsgültig geprüften Register, das mit dem gewählten Betriebszustand des Verbrauchsmessers verknüpft ist, sowie in dem dritten rechtsgültig geprüften Verbrauchsregister angeordnet ist.

5. Verbrauchsmesser nach einem der Ansprüche 1 oder 2, wobei die Recheneinheit mindestens ein drittes rechtsgültig geprüftes Verbrauchsregister umfasst, das mit dem ersten und dem zweiten Betriebszustand verknüpft ist, wobei der Verbrauchsmesser zum Speichern von Verbrauchswerten in dem rechtsgültig geprüften Register, das mit dem gewählten Betriebszustand des Verbrauchsmessers verknüpft ist, oder in dem dritten rechtsgültig geprüften Verbrauchsregister auf der Grundlage eines Speicherkriteriums angeordnet ist.

6. Verbrauchsmesser nach einem der vorhergehenden Ansprüche, wobei mindestens eines der rechtsgültig geprüften Verbrauchsregister zum Speichern von Verbrauchswerten eine Zugangsbeschränkung aufweist, sodass Daten nur nach Erfüllen der Zugangsbeschränkung im Register gespeichert werden können.

7. Verbrauchsmesser nach einem der vorhergehenden Ansprüche, wobei die Strömungsmessereinheit ein Strömungsmessereinheitsgehäuse umfasst und wobei ein erster des Eingangs- und Ausgangstemperatursensors an einem Empfängerort montiert ist, der in dem Strömungsmessereinheitsgehäuse enthalten ist, und wobei ein zweiter des Eingangs- und Ausgangstemperatursensors in einer Empfängereinheit montiert ist, die von dem Strömungsmessereinheitsgehäuse getrennt ist.

8. Verbrauchsmesser nach einem der vorhergehenden Ansprüche, wobei die zu empfangende Eingabe von der Recheneinheit empfangen wird und auf einem Temperaturunterschied zwischen der Eingangstemperatur und der Ausgangstemperatur basiert.

9. Verbrauchsmesser nach einem der vorhergehenden Ansprüche, wobei die zu empfangende Eingabe von der Recheneinheit empfangen wird und auf einer Temperatur der eingespeisten Flüssigkeit basiert.

10. Verfahren zum Installieren eines Verbrauchsmessers (1), der für eine ortsfeste Installation an einem Verbrauchsort (2) zum Messen von Verbrauchsdaten einer entweder heißen oder kalten am Verbrauchsort eingespeisten Flüssigkeit angeordnet ist,
wobei der Messer umfasst:
- eine Strömungsmessereinheit (5), die zur Montage an entweder eine Eingangsseite (3) oder einer Ausgangsseite (4) des Verbrauchsorts angeordnet ist und zum Messen einer Durchflussmenge der eingespeisten Flüssigkeit angeordnet ist;
- einen Eingangstemperatursensor (6) zum Messen einer Eingangstemperatur der eingespeisten Flüssigkeit und einen Ausgangstemperatursensor (7) zum Messen einer Ausgangstemperatur der eingespeisten Flüssigkeit;
- eine Recheneinheit (8), die zum Bestimmen der Verbrauchswerte auf der Grundlage der Durchflussmenge, der Eingangstemperatur und der Ausgangstemperatur konfiguriert ist, wobei die Recheneinheit mindestens ein erstes (R₁) und ein zweites (R₂) rechtsgültig geprüftes Verbrauchsregister zum Speichern von zur Rechnungsstellung geprüften Verbrauchswerten umfasst, wobei das erste rechtsgültig geprüfte Verbrauchsregister mit einem ersten Betriebszustand des Verbrauchsmessers verknüpft ist, der an der Eingangsseite des Verbrauchsorts montiert ist, und das zweite rechtsgültig geprüfte Verbrauchsregister mit einem zweiten Betriebszustand des Verbrauchsmessers verknüpft ist, der an der Ausgangsseite des Verbrauchsorts montiert ist;
- wobei der Verbrauchsmesser zum Empfangen der Eingabe angeordnet ist, während er sich in einem Einstellmodus befindet, und wobei der Verbrauchsmesser zum automatischen Beenden des Einstellmodus durch Erfassen eines Durchflusses einer vorbestimmten Menge der eingespeisten Flüssigkeit angeordnet ist; und
wobei das Verfahren umfasst:
- Anordnen der Strömungsmessereinheit an entweder einer Eingangsseite oder einer Ausgangsseite des Verbrauchsorts;
- Bereitstellen einer von dem Verbrauchsmesser zu empfangenden Eingabe zur Wahl zwischen dem mindestens ersten und zweiten Betriebszustand des Verbrauchsmessers, wobei Betriebszustand des Verbrauchsmessers in Übereinstimmung mit der Anordnung der Strömungsmessereinheit am Verbrauchsort ist, um Verbrauchswerte in dem rechtsgültig geprüften Register zu speichern, das mit dem ausgewählten Betriebszustand des Verbrauchsmessers verknüpft ist.

## Revendications

1. Compteur de consommation (1) disposé pour une installation fixe sur un site de consommation (2) afin de mesurer des données de consommation d'un liquide chaud ou froid fourni au site de consommation, le compteur comprenant :
- une unité débitmètre (5) disposée pour être montée d'un côté entrée (3) ou d'un côté sortie (4) du site de consommation, et disposée pour mesurer une quantité écoulée du liquide fourni ;
- une sonde de température d'entrée (6) pour mesurer une température d'entrée du liquide fourni, et une sonde de température de sortie (7) pour mesurer une température de sortie du liquide fourni ;
- une unité de calcul (8) configurée pour déterminer des valeurs de consommation sur la base de la quantité écoulée, de la température d'entrée et de la température de sortie, **caractérisée en ce que** l'unité de calcul comprend au moins un premier (R₁) et un deuxième (R₂) registre de consommation légalement vérifié pour stocker des valeurs de consommation vérifiées à des fins de facturation, le premier registre de consommation légalement vérifié étant associé à un premier état de fonctionnement du compteur de consommation lorsque celui-ci est monté du côté entrée du site de consommation et le deuxième registre de consommation légalement vérifié étant associé à un deuxième état de fonctionnement du compteur de consommation lorsque celui-ci est monté du côté sortie du site de consommation, si bien que le compteur de consommation est capable de mesurer des données de consommation légalement vérifiées pour chacun des au moins un premier et un deuxième état de fonctionnement ;
dans lequel le compteur de consommation est disposé pour recevoir une entrée et pour paramétrer l'état de fonctionnement du compteur de consommation sur la base de l'entrée en fonction de la disposition de l'unité débitmètre sur le site de consommation, de manière à stocker des valeurs de consommation dans le registre légalement vérifié associé à l'état de fonctionnement paramétré du compteur de consommation,
dans lequel le compteur de consommation est disposé pour recevoir l'entrée tout en étant dans un mode de réglage, et dans lequel le compteur de consommation est disposé pour arrêter automatiquement le mode de réglage lorsqu'il détecte un écoulement d'une quantité présélectionnée du liquide fourni.

2. Compteur de consommation selon la revendication 1, dans lequel le compteur de consommation est en outre disposé, dans le cas où un état de fonctionnement du compteur de consommation serait incompatible avec l'installation réelle de l'unité débitmètre, pour recevoir une entrée supplémentaire sur le site de consommation et pour paramétrer l'état de fonctionnement du compteur de consommation sur la base de l'entrée en fonction de la disposition de l'unité débitmètre sur le site de consommation, de manière à stocker les valeurs de consommation dans le registre légalement vérifié associé à l'état de fonctionnement paramétré du compteur de consommation.

3. Compteur de consommation selon l'une quelconque des revendications précédentes, dans lequel le compteur de consommation comprend au moins quatre registres de consommation légalement vérifiés pour stocker des valeurs de consommation vérifiées à des fins de facturation et comprend un premier registre de consommation légalement vérifié pour l'énergie de chauffage dans le montage en entrée, et un deuxième registre de consommation légalement vérifié pour l'énergie de chauffage dans le montage en sortie, et un troisième registre de consommation légalement vérifié pour l'énergie de refroidissement dans le montage en entrée, et un quatrième registre de consommation légalement vérifié pour l'énergie de refroidissement dans le montage en sortie.

4. Compteur de consommation selon l'une quelconque des revendications 1 ou 2, dans lequel l'unité de calcul comprend au moins un troisième registre de consommation légalement vérifié associé au premier ou au deuxième état de fonctionnement, dans lequel le compteur de consommation est disposé pour stocker des valeurs de consommation dans le registre légalement vérifié associé à l'état de fonctionnement sélectionné du compteur de consommation ainsi que dans le troisième registre de consommation légalement vérifié.

5. Compteur de consommation selon l'une quelconque des revendications 1 ou 2, dans lequel l'unité de calcul comprend au moins un troisième registre de consommation légalement vérifié associé au premier ou au deuxième état de fonctionnement, dans lequel le compteur de consommation est disposé pour stocker des valeurs de consommation dans le registre légalement vérifié associé à l'état de fonctionnement sélectionné du compteur de consommation ou dans le troisième registre de consommation légalement vérifié sur la base d'un critère de stockage.

6. Le compteur de consommation selon l'une quelconque des revendications précédentes, dans lequel une contrainte d'accès est imposée à au moins un des registres de consommation légalement vérifiés pour le stockage des valeurs de consommation, si bien que les données ne peuvent être stockées dans le registre que lorsque la contrainte d'accès est satisfaite.

7. Le compteur de consommation selon l'une quelconque des revendications précédentes, dans lequel l'unité débitmètre comprend un boîtier d'unité débitmètre, et dans lequel une première sonde parmi les sondes de température d'entrée et de sortie est montée dans un site de réception compris dans le boîtier d'unité débitmètre, et dans lequel une deuxième sonde parmi les sondes de température d'entrée et de sortie est montée dans une unité de réception séparée du boîtier d'unité débitmètre.

8. Le compteur de consommation selon l'une quelconque des revendications précédentes, dans lequel l'entrée devant être reçue est reçue par l'unité de calcul et est basée sur une différence de température entre la température d'entrée et la température de sortie.

9. Le compteur de consommation selon l'une quelconque des revendications précédentes, dans lequel l'entrée devant être reçue est reçue par l'unité de calcul et est basée sur une température du liquide fourni.

10. Procédé d'installation d'un compteur de consommation (1) disposé pour une installation fixe sur un site de consommation (2) afin de mesurer des données de consommation d'un liquide chaud ou froid fourni au site de consommation,
dans lequel le compteur comprend :
- une unité débitmètre (5) disposée pour être montée d'un côté entrée (3) ou d'un côté sortie (4) du site de consommation, et disposée pour mesurer une quantité écoulée du liquide fourni ;
- une sonde de température d'entrée (6) pour mesurer une température d'entrée du liquide fourni, et une sonde de température de sortie (7) pour mesurer une température de sortie du liquide fourni ;
- une unité de calcul (8) configurée pour déterminer des valeurs de consommation sur la base de la quantité écoulée, de la température d'entrée et de la température de sortie, dans laquelle l'unité de calcul comprend au moins un premier (R₁) et un deuxième (R₂) registres de consommation légalement vérifiés pour stocker des valeurs de consommation vérifiées à des fins de facturation, le premier registre de consommation légalement vérifié étant associé à un premier état de fonctionnement du compteur de consommation lorsque celui-ci est monté du côté entrée du site de consommation et le deuxième registre de consommation légalement vérifié étant associé à un deuxième état de fonctionnement du compteur de consommation lorsque celui-ci est monté du côté sortie du site de consommation ;
- dans lequel le compteur de consommation est disposé pour recevoir l'entrée tout en étant dans un mode de réglage, et dans lequel le compteur de consommation est disposé pour arrêter automatiquement le mode de réglage lorsqu'il détecte un écoulement d'une quantité présélectionnée du liquide fourni ; et
dans lequel le procédé comprend :
- la disposition de l'unité débitmètre d'un côté entrée ou d'un côté sortie du site de consommation ;
- l'apport d'une entrée devant être reçue par le compteur de consommation, afin de sélectionner, parmi les au moins un premier et deuxième état de fonctionnement du compteur de consommation, l'état de fonctionnement du compteur de consommation en fonction de la disposition de l'unité débitmètre sur le site de consommation de manière à stocker des valeurs de consommation dans le registre légalement vérifié associé à l'état de fonctionnement sélectionné du compteur de consommation.
